(19) Europäisches Patentamt / European Patent Office / Office européen des brevets

(11) **EP 3 020 538 B1**

(12) **EUROPEAN PATENT SPECIFICATION**

(45) Date of publication and mention
of the grant of the patent:
**26.04.2017  Bulletin 2017/17**

(51) Int Cl.:
***B29C 67/00*** *(2017.01)*  ***B33Y 30/00*** *(2015.01)*

(21) Application number: **15194343.8**

(22) Date of filing: **12.11.2015**

(54) **THREE-DIMENSIONAL OBJECT FORMATION APPARATUS**

VORRICHTUNG ZUR FORMUNG EINES DREIDIMENSIONALEN OBJEKTS

APPAREIL DE FORMATION D'UN OBJET TRIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.11.2014  JP 2014230164**

(43) Date of publication of application:
**18.05.2016  Bulletin 2016/20**

(73) Proprietor: **Seiko Epson Corporation
Shinjuku-ku
Tokyo (JP)**

(72) Inventor: **YAMAZAKI, Satoshi
Suwa-shi, Nagano 392-8502 (JP)**

(74) Representative: **Miller Sturt Kenyon
9 John Street
London WC1N 2ES (GB)**

(56) References cited:
**EP-A2- 0 918 433      EP-A2- 2 189 272
US-A1- 2002 167 101**

## Description

BACKGROUND

1. Technical Field

The present invention relates to a three-dimensional object formation apparatus.

2. Related Art

In recent years, various three-dimensional object formation apparatuses such as a 3D printer have been proposed. The three-dimensional object formation apparatus cures dots which are formed by discharging liquid such as ink, forms a formation layer having a predetermined thickness with the cured dots, and laminates the formed formation layers to form a three-dimensional object.

In such a three-dimensional object formation apparatus, in order to form a colored three-dimensional object, a technology of forming a three-dimensional object with dots with a plurality of colors which are formed with liquid of a plurality of colors has been known (for example, see JP-A-2000-280354 and JP-A-2013-075390).

However, since the three-dimensional object formation apparatus forms a three-dimensional object by laminating the formation layers, each formation layer is formed to have an even thickness. Accordingly, in general, dots configuring each formation layer are also formed to have a uniform size.

When the sizes of the dots configuring the three-dimensional object are uniform, the color of the three-dimensional object is expressed by a combination of colors for each dot. In this case, a change in the color between two adjacent dots may become great to cause graininess to become actualized, or since the color of the three-dimensional object is dependent on the size of the dots and the color of liquid for forming the dots, shading of the three-dimensional object may not be sufficiently expressed, and therefore, the intended expressed color, may not be properly expressed.

EP 2 189 272 discloses a method for creating a three-dimensional structure on a surface of an object, which involves positioning an object on a positioning device, and hardening a three-dimensional structure. A position, number and/or volume of drops of structure-forming mass are determined by a control device based on the three dimensional structure in planes in different directions and in directions transverse to the planes. The planes are parallel to a bearing surface of the positioning device for the object. The drops are delivered to a surface of the object by a delivery device of an application device.

SUMMARY

An advantage of some aspects of the invention is to provide a technology of expressing a proper color in a three-dimensional object which is formed by a three-dimensional object formation apparatus.

According to an aspect of the invention, there is provided a three-dimensional object formation apparatus as defined in claim 1.

In this case, since the formation layer is formed using the first dot and the second dot having different sizes from each other, it is possible to separately use the dots to be used, depending on the degree of shading of the color to be expressed. Therefore, it is possible to increase the number of gradations of color to be expressed and to express a proper color, compared to a case of forming the formation layer with dots having one size.

In this case, since the formation layer is formed using the second dot and the third dot having sizes different from each other, it is possible to separately use the dots to be used, depending on the degree of shading of the color to be expressed. Therefore, it is possible to increase the number of gradations and to express a proper color, compared to a case of forming the formation layer with dots having one size.

In addition, in this case, since the formation layer is formed as an assembly of the unit structures, the thickness of the formation layer can be uniform and a three-dimensional object having a proper shape as originally intended can be formed.

In the three-dimensional object formation apparatus described above, it is preferable that the control unit can also control the discharge of the liquid from the head unit so as to form a unit structure with one first dot.

In this case, since the formation layer is formed using the first dot, the second dot, and the third dot having different sizes from each other, it is possible to increase the number of gradations and to express a proper color.

In the three-dimensional object formation apparatus described above, it is preferable that the first color is a chromatic color, and the second color is an achromatic color.

In this case, when it is difficult to form the unit structure only with the chromatic dots, it is possible to form the unit structure by forming achromatic dots, in addition to the chromatic dots. Therefore, the thickness of the formation layer can be uniform, it is possible to form the three-dimensional object having a proper shape, and a color with high gradation can be expressed.

BRIEF DESCRIPTION OF THE DRAWINGS

Embodiments of the invention will now be described by way of example only with reference to the accompanying drawings, wherein like numbers reference like elements.

Fig. 1 is a block diagram showing a configuration of a three-dimensional object formation system according to the invention.

Figs. 2A to 2E are explanatory diagrams for illustrating the formation of an object by the three-dimensional object formation system.

Fig. 3 is a schematic sectional view of a three-dimensional object formation apparatus.

Fig. 4 is a schematic sectional view of a recording head.

Figs. 5A to 5C are explanatory diagrams for illustrating an operation of a discharging unit when supplying a driving signal.

Fig. 6 is a plan view showing an arrangement example of nozzles of the recording head.

Fig. 7 is a block diagram showing a configuration of a driving signal generation unit.

Fig. 8 is an explanatory diagram showing the content of a selection signal.

Fig. 9 is a timing chart showing waveforms of a driving waveform signal.

Fig. 10 is a flowchart for illustrating a formation process.

Fig. 11 is an explanatory diagram for illustrating a relationship between voxels and dots.

Figs. 12A and 12B are explanatory diagrams for illustrating a formation layer according to Comparative Example 1.

Fig. 13 is an explanatory diagram for illustrating a formation layer according to Comparative Example 2.

Figs. 14A and 14B are explanatory diagrams for illustrating a formation layer according to the invention.

Fig. 15 is a flowchart for illustrating a formation process according to Modification Example 1.

Figs. 16A to 16F are explanatory diagrams for illustrating the formation of a three-dimensional object by the three-dimensional object formation system according to Modification Example 1.

DESCRIPTION OF EXEMPLARY EMBODIMENTS

Hereinafter, embodiments for realizing the invention will be described with reference to the drawings. Herein, in each drawing, dimensions and scales of each drawing are appropriately modified from the actual dimensions and scales. The embodiments which will be described below are preferable specific examples of the invention, and therefore, various technologically preferable limitations are set. However, the scope of the invention is not limited to the embodiments, unless there is a limitation of the invention in the following description.

A. Embodiment

In the embodiment, as a three-dimensional object formation apparatus, an ink jet type three-dimensional object formation apparatus which discharges a curable ink (an example of "liquid") such as resin ink containing a resin emulsion or ultraviolet curable ink to form a three-dimensional object Obj will be described as an example.

1. Configuration of Three-Dimensional Object Formation System

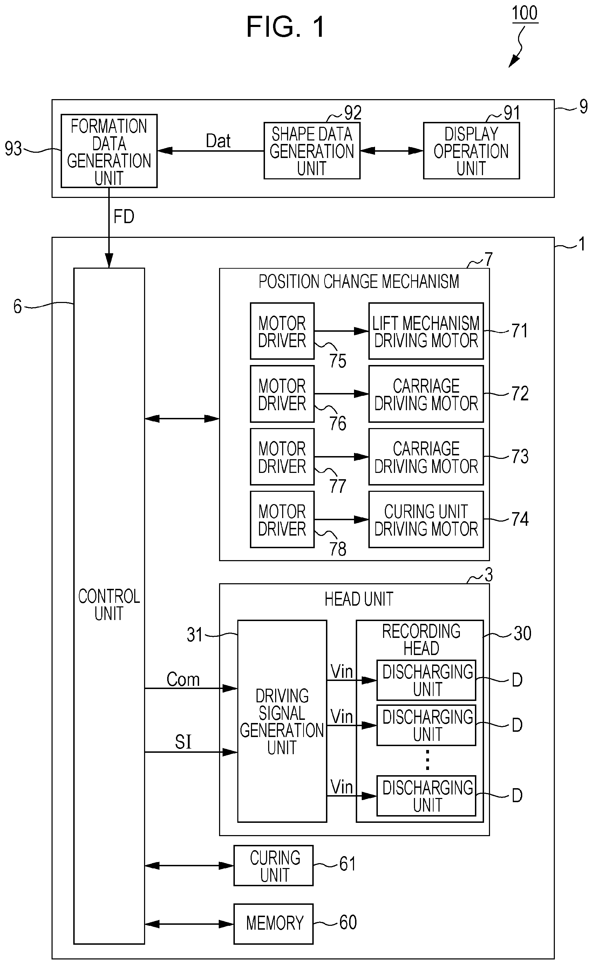

Hereinafter, a configuration of a three-dimensional object formation system 100 including a three-dimensional object formation apparatus 1 according to the embodiment will be described with reference to Fig. 1 to Fig. 9.

Fig. 1 is a functional block diagram showing a configuration of the three-dimensional object formation system 100.

As shown in Fig. 1, the three-dimensional object formation system 100 includes the three-dimensional object formation apparatus 1 which discharges ink, forms a formation layer LY having a predetermined thickness $\Delta Z$ with dots formed by the discharged ink, and laminates the formation layers LY to form a three-dimensional object Obj, and a host computer 9 which generates formation layer data FD which determines a shape and a color of each of the plural formation layers LY configuring the three-dimensional object Obj which is formed by the three-dimensional object formation apparatus 1.

1.1. Host Computer

As shown in Fig. 1, the host computer 9 includes a CPU (not shown) which controls an operation of each unit of the host computer 9, a display unit (not shown) such as a display, an operation unit 91 such as a keyboard or a mouse, an information memory (not shown) on which a control program of the host computer 9, a driver program of the three-dimensional object formation apparatus 1, and an application program such as computer aided design (CAD) software are recorded, a shape data generation unit 92 which generates shape data Dat which designates the shape and the color of the three-dimensional object Obj to be formed by the three-dimensional object formation apparatus 1, and a formation data generation unit 93 which generates the formation layer data FD based on the shape data Dat.

The shape data generation unit 92 is a functional block which is realized by execution of the application program recorded on the information memory by the CPU of the host computer 9. The shape data generation unit 92 is, for example, a CAD application, and generates the shape data Dat which designates the shape and the color of the three-dimensional object Obj based on information which is input by operating the operation unit 91 by a user of the three-dimensional object formation system 100.

In the embodiment, a case where the shape data Dat designates an external shape of the three-dimensional object Obj is assumed. That is, a case where the shape data Dat is data which designates a shape of a hollow object in a case where it is assumed that the three-dimensional object Obj is the hollow object, that is, a shape of an outline of the three-dimensional object Obj, is assumed. For example, when the three-dimensional object Obj is a sphere, the shape data Dat shows a spherical shape which is an outline of the sphere.

However, the invention is not limited to such an embodiment, and the shape data Dat may include at least information in which the external shape of the three-dimensional object Obj can be specified. For example, the shape data Dat may designate an internal shape or a material of the three-dimensional object Obj, in addition to the external shape or the color of the three-dimensional object Obj.

As the shape data Dat, a data format such as additive manufacturing file format (AMF) or standard triangulated language (STL) can be used, for example.

The formation data generation unit 93 is a functional block which is realized by execution of the driver program of the three-dimensional object formation apparatus 1 recorded on the information memory by the CPU of the host computer 9. The formation data generation unit 93 generates the formation layer data FD which determines a shape and a color of the formation layer LY formed by the three-dimensional object formation apparatus 1, based on the shape data Dat generated by the shape data generation unit 92.

Hereinafter, a case where the three-dimensional object Obj is formed by laminating Q formation layers LY is assumed (Q is a natural number satisfying an expression of $Q \geq 2$). Hereinafter, a q-th formation layer LY is referred to as a formation layer LY[q] and the formation layer data FD which determines a shape and a color of the q-th formation layer LY[q] is referred to as formation layer data FD[q] (q is a natural number satisfying an expression of $1 \leq q \leq Q$).

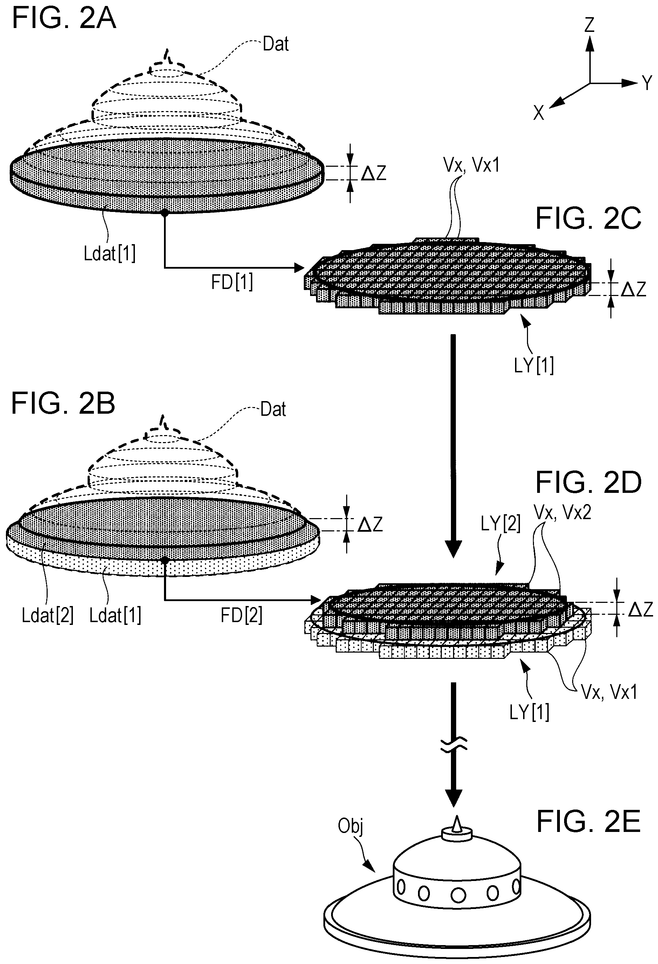

Figs. 2A to 2E are explanatory diagrams for illustrating a relationship between the shape data Dat and the formation layer LY which is formed based on the formation layer data FD.

As shown in Figs. 2A to 2B, in order to generate formation layer data items FD[1] to FD[Q] which determine the shape and the color of formation layers LY[1] to LY[Q] having a predetermined thickness $\Delta Z$, the formation data generation unit 93 first slices a three-dimensional shape shown by the shape data Dat into the predetermined thickness $\Delta Z$ to generate section body data items Ldat[1] to Ldat[Q] corresponding to the formation layers LY[1] to LY[Q]. Herein, the section body data Ldat is data showing the shape and the color of the section body which is obtained by slicing the shape of the three-dimensional shape shown by the shape data Dat. However, the section body data Ldat may be data including the shape of the section when the three-dimensional shape shown by the shape data Dat is sliced.

Fig. 2A shows the section body data Ldat[1] corresponding to the first formation layer LY[1] and Fig. 2B shows the section body data Ldat[2] corresponding to the second formation layer LY[2].

Next, in order to form the formation layer LY[q] corresponding to the shape and the color shown by the section body data Ldat[q], the formation data generation unit 93 determines the arrangement of dots to be formed by the three-dimensional object formation apparatus 1 and outputs the determined results as the formation layer data FD[q]. That is, the formation layer data FD[q] is data which designates dots to be formed in each of plural voxels Vx, when the section body data Ldat[q] is segmented in a granular shape and the shape and the color shown by the section body data Ldat[q] are represented as an assembly of voxels Vx. Herein, the voxel Vx is a cuboid or a cube having a predetermined size and has the predetermined thickness $\Delta Z$ and a predetermined volume. In the embodiment, the volume and the size of the voxel Vx are determined according to the size of the dots which can be formed by the three-dimensional object formation apparatus 1. Hereinafter, the voxel Vx corresponding to the q-th formation layer LY[q] may be referred to as a voxel Vxq.

Hereinafter, a constituent element of the formation layer LY configuring the three-dimensional object Obj which is formed corresponding to one voxel Vx and has the predetermined volume and the predetermined thickness $\Delta Z$ may be referred to as a unit structure. The details will be described later, but the unit structure is configured with one or the plurality of dots. That is, the unit structure is one or the plurality of dots which are formed so as to satisfy one voxel Vx. That is, in the embodiment, the formation layer data FD designates that one or the plurality of dots are formed in each voxel Vx.

When the formation data generation unit 93 outputs the formation layer data FD[q], the three-dimensional object formation apparatus 1 forms the formation layer LY[q] based on the formation layer data FD[q], as shown in Figs. 2C and 2D. Fig. 2C shows the first formation layer LY[1] formed on a formation table 45 based on the formation layer data FD[1] generated from the section body data Ldat[1] and Fig. 2D shows the second formation layer LY[2] formed on the formation layer LY[1] based on the formation layer data FD[2] generated from the section body data Ldat[2].

As shown in Fig. 2E, the three-dimensional object formation apparatus 1 forms the three-dimensional object Obj by sequentially laminating the formation layers LY[1] to LY[Q] formed based on the formation layer data items FD[1] to FD[Q].

As described above, the shape data Dat according to the embodiment designates the external shape (shape of the outline) of the three-dimensional object Obj. Accordingly, when the three-dimensional object Obj having the shape shown by the shape data Dat is reliably formed, the shape of the three-dimensional object Obj becomes a hollow shape. However, when forming the three-dimensional object Obj, it is preferable to determine the inner shape of the three-dimensional object Obj by considering the strength of the three-dimensional object Obj. Specifically, when forming the three-dimensional object Obj, it is preferable that a part or the entirety of the inside of the three-dimensional object Obj has a solid structure.

Accordingly, as shown in Figs. 2A to 2E, the formation data generation unit 93 according to the embodiment generates the formation layer data FD so that a part or the entirety of the inside of the three-dimensional object Obj has a solid structure, regardless of the fact that the shape designated by the formation data Dat is a hollow shape.

However, in the example shown in Figs. 2A to 2E, a voxel Vx1 configuring the first formation layer LY[1] exists on the lower side (negative Z direction) of a voxel Vx2 configuring the second formation layer LY[2]. However, the voxel Vx1 may not exist on the lower side (negative Z direction) of the voxel Vx2 depending on the shape of the three-dimensional object Obj. In such a case, although a dot is attempted to be formed in the second voxel Vx2, the dot may fall into the first layer. Accordingly, in this case, when the q-th layer is an upper layer with respect to the second layer (when an expression of $q \geq 2$ is satisfied), it is necessary to provide a support for supporting the dots formed in the voxel Vxq on the lower side of the voxel Vxq, in order to form the dots in the q-th voxel Vxq as originally intended.

Therefore, in the embodiment, the formation layer data FD includes the data which determines the shape of the support which is necessary when forming the three-dimensional object Obj, in addition to the three-dimensional object Obj. That is, the formation layer data FD[q] includes data which represents the shape of the support formed on the q-th layer as an assembly of the voxels Vx. That is, in the embodiment, in addition to the three-dimensional object Obj to be formed on the q-th layer, the formation layer LY[q] also includes the support to be formed on the q-th layer.

The formation data generation unit 93 according to the embodiment determines whether or not it is necessary to provide the support for forming the voxel Vxq, based on the section body data Ldat or the shape data Dat. When the result of the determination is positive, the formation data generation unit 93 generates the formation layer data FD in which the support is provided in addition to the three-dimensional object Obj.

The support is preferably configured with a material which can be easily removed after forming the three-dimensional object Obj, for example, water-soluble ink.

1.2. Three-Dimensional Object Formation Apparatus

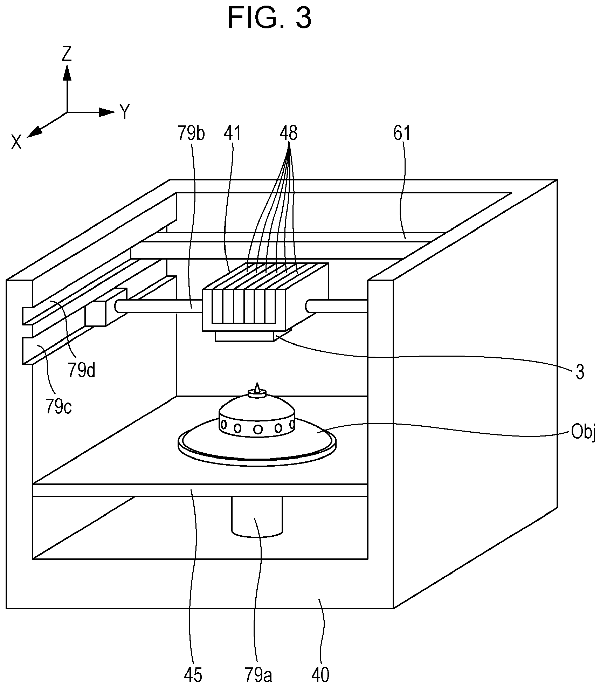

Next, the three-dimensional object formation apparatus 1 will be described with reference to Fig. 3, in addition to Fig. 1. Fig. 3 is a perspective view schematically showing the internal structure of the three-dimensional object formation apparatus 1.

As shown in Fig. 1 and Fig. 3, the three-dimensional object formation apparatus 1 includes a housing 40, the formation table 45, a control unit 6 which controls the operation of each unit of the three-dimensional object formation apparatus 1, a head unit 3 in which a recording head 30 including a discharging unit D discharging ink towards the formation table 45 is provided, a curing unit 61 which cures ink discharged onto the formation table 45, six ink cartridges 48, a carriage 41 on which the head unit 3 and the ink cartridges 48 are mounted, a position change mechanism 7 for changing the positions of the head unit 3, the formation table 45, and the curing unit 61 with respect to the housing 40, and a memory 60 on which a control program of the three-dimensional object formation apparatus 1 or other various information items are recorded.

The curing unit 61 is a constituent element for curing ink which is discharged onto the formation table 45, and a light source for emitting an ultraviolet ray to ultraviolet curable ink or a heater for heating resin ink can be exemplified, for example. When the curing unit 61 is a light source of an ultraviolet ray, the curing unit 61 is, for example, provided on the upper side (positive Z direction) of the formation table 45. Meanwhile, when the curing unit 61 is a superheater, the curing unit 61 may be, for example, provided inside of the formation table 45 or on the lower side of the formation table 45.

Hereinafter, the description will be made by assuming that the curing unit 61 is a light source of an ultraviolet ray and the curing unit 61 is positioned in the positive Z direction of the formation table 45.

The six ink cartridges 48 are provided to correspond to a total of six types of ink including five colored formation inks for forming the three-dimensional object Obj and a supporting ink for forming the support, one by one. The type of ink corresponding to the ink cartridge 48 is filled in each ink cartridge 48.

In the embodiment, as the five colored formation inks for forming the three-dimensional object Obj, cyan (CY), magenta (MG), and yellow (YL) inks which are chromatic inks and white (WT) and clear (CL) inks which are achromatic inks are assumed. Herein, the clear (CL) ink is ink having transparency which is at least higher than the chromatic ink.

Each ink cartridge 48 may be provided in separate places of the three-dimensional object formation apparatus 1, instead of being mounted on the carriage 41.

As shown in Fig. 1 and Fig. 3, the position change mechanism 7 includes a lift mechanism driving motor 71 for driving a formation table lift mechanism 79a which lifts the formation table 45 up and down in the positive Z direction and the negative Z direction (hereinafter, the positive Z direction and the negative Z direction may be collectively referred to as the "Z axis direction"), a carriage driving motor 72 for moving the carriage 41 along a guide 79b in a positive Y direction and a negative Y direction (hereinafter, the positive Y direction and the negative Y direction may be collectively referred to as the "Y axis direction"), a carriage driving motor 73 for moving the carriage 41 along a guide 79c in a positive X direction and a negative X direction (hereinafter, the positive X direction and the negative X direction may be collectively referred to as the "X axis direction"), and a curing unit driving motor 74 for moving the curing unit 61 along a guide 79d in the positive X direction and the negative X direction.

In addition, the position change mechanism 7 includes a motor driver 75 for driving the lift mechanism driving motor 71, a motor driver 76 for driving the carriage driving motor 72, a motor driver 77 for driving the carriage driving motor 73, and a motor driver 78 for driving the curing unit driving motor 74.

The memory 60 includes an electrically erasable programmable read-only memory (EEPROM) which is one kind of a nonvolatile semiconductor memory which stores the formation layer data FD supplied from the host computer 9, a random access memory (RAM) which temporarily stores data which is necessary for executing various processes such as a formation process of forming the three-dimensional object Obj or temporarily develops a control program for controlling each unit of the three-dimensional object formation apparatus 1 so as to execute various processes such as the formation process, and a PROM which is one kind of a nonvolatile semiconductor memory which stores the control program.

The control unit 6 is configured to include a central processing unit (CPU) or a field-programmable gate array (FPGA) and controls the operation of each unit of the three-dimensional object formation apparatus 1 with the operation of the CPU which is performed along with the control program recorded on the memory 60.

The control unit 6 controls the operation of the head unit 3 and the position change mechanism 7 based on the formation layer data FD supplied from the host computer 9 and accordingly, controls the execution of the formation process of forming the three-dimensional object Obj corresponding to the shape data Dat on the formation table 45.

Specifically, first, the control unit 6 stores the formation layer data FD supplied from the host computer 9 in the memory 60. Next, the control unit 6 generates various signals including a driving waveform signal Com and a waveform designation signal SI for driving the discharging unit D by controlling the operation of the head unit 3, based on various data recorded on the memory 60 such as the formation layer data FD, and outputs the generated signals. In addition, the control unit 6 generates various signals for controlling the operations of the motor drivers 75 to 78 based on various data recorded on the memory 60 such as the formation layer data FD, and outputs the generated signals.

The driving waveform signal Com is an analog signal. Accordingly, the control unit 6 includes a DA conversion signal (not shown) and converts a digital driving waveform signal generated in the CPU included in the control unit 6 into the analog driving waveform signal Com and then outputs the driving waveform signal.

As described above, the control unit 6 controls a relative position of the head unit 3 to the formation table 45 through the control of the motor drivers 75, 76, and 77 and controls a relative position of the curing unit 61 to the formation table 45 through the control of the motor drivers 75 and 78. In addition, the control unit 6 controls discharge or non-discharge of the ink from the discharging unit D, an amount of the ink discharged, and discharge timing of the ink through the control of the head unit 3.

Accordingly, the control unit 6 controls the execution of the formation process of forming the three-dimensional object Obj corresponding to the shape data Dat, by adjusting the dot size and the dot arrangement regarding the dots which are formed by the ink discharged onto the formation table 45, curing the dots formed on the formation table 45 to form the formation layer LY, and further laminating a new formation layer LY on the formed formation layer LY.

As shown in Fig. 1, the head unit 3 includes the recording head 30 including M discharging units D and a driving signal generation unit 31 which generates driving signals Vin for driving the discharging units D (M is a natural number equal to or greater than 1).

Hereinafter, in order to differentiate each of the M discharging units D provided in the recording head 30, the discharging units may be referred to as first, second, ..., M-th discharging unit, sequentially. In addition, hereinafter, an m-th discharging unit D among the M discharging units D provided in the recording head 30 may be expressed as a discharging unit D[m] (m is a natural number which satisfies an expression of $1 \leq m \leq M$). In addition, hereinafter, a driving signal Vin for driving the discharging unit D[m] among the driving signals Vin generated by the driving signal generation unit 31 may be expressed as a driving signal Vin[m].

The driving signal generation unit 31 will be described later in detail.

1.3. Recording Head

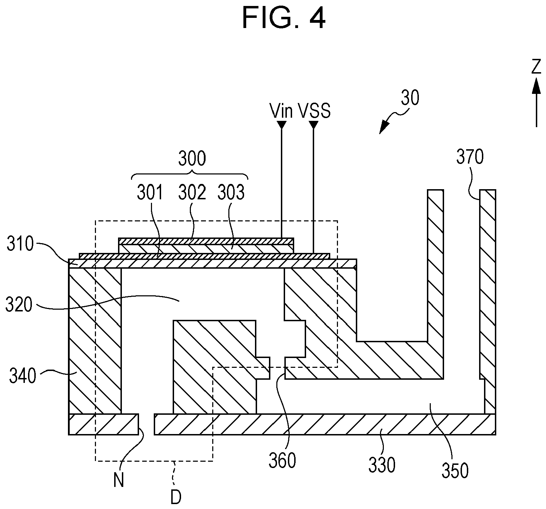

Next, the recording head 30 and the discharging units D provided in the recording head 30 will be described with reference to Fig. 4 to Fig. 6.

Fig. 4 is an example of a schematic partial sectional view of the recording head 30. In this drawing, for convenience of illustration, in the recording head 30, one discharging unit D among the M discharging units D included in the recording head 30, a reservoir 350 which is linked to the one discharging unit D through an ink supply port 360, and an ink inlet 370 for supplying the ink to the reservoir 350 from the ink cartridge 48 are shown.

As shown in Fig. 4, the discharging unit D includes a piezoelectric element 300, a cavity 320, inside of which is filled with the ink, a nozzle N which is linked to the cavity 320, and a vibration plate 310. The piezoelectric element 300 is driven by the driving signal Vin and accordingly the discharging unit D discharges the ink in the cavity 320 from the nozzle N. The cavity 320 is a space which is partitioned by a cavity plate 340 which is formed in a predetermined shape so as to have a recess, a nozzle plate 330 on which the nozzle N is formed, and the vibration plate 310. The cavity 320 is linked to the reservoir 350 through the ink supply port 360. The reservoir 350 is linked to one ink cartridge 48 through the ink inlet 370.

In the embodiment, a unimorph (monomorph) type as shown in Fig. 4 is used, for example, as the piezoelectric element 300. The piezoelectric element 300 is not limited to the unimorph type, and any type may be used such as a bimorph type or a lamination type, as long as the piezoelectric element 300 can be deformed to discharge the liquid such as ink.

The piezoelectric element 300 includes a lower electrode 301, an upper electrode 302, and a piezoelectric body 303 which is provided between the lower electrode 301 and the upper electrode 302. When a potential of the lower electrode 301 is set as a predetermined reference potential VSS, the driving signal Vin is supplied to the upper electrode 302, and accordingly, a voltage is applied between the lower electrode 301 and the upper electrode 302, the piezoelectric element 300 is bent (displaced) in a vertical direction of the drawing according to the applied voltage and as a result, the piezoelectric element 300 is vibrated.

The vibration plate 310 is installed on the upper opening of the cavity plate 340 and the lower electrode 301 is bonded to the vibration plate 310. Accordingly, when the piezoelectric element 300 is vibrated by the driving signal Vin, the vibration plate 310 is also vibrated. The volume of the cavity 320 (pressure in the cavity 320) changes according to the vibration of the vibration plate 310 and the ink filled in the cavity 320 is discharged by the nozzle N. When the ink in the cavity 320 is decreased due to the discharge of the ink, the ink is supplied from the reservoir 350. In addition, the ink is supplied to the reservoir 350 from the ink cartridge 48 through the ink inlet 370.

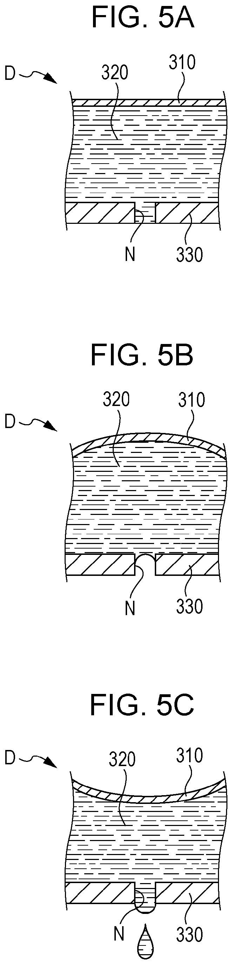

Figs. 5A to 5C are explanatory diagrams illustrating a discharging operation of the ink from the discharging unit D. In a state shown in Fig. 5A, when the driving signal Vin is supplied to the piezoelectric element 300 included in the discharging unit D from the driving signal generation unit 31, distortion according to an electric field applied between the electrodes occurs in the piezoelectric element 300 and the vibration plate 310 of the discharging unit D is bent in the vertical direction of the drawing. Accordingly, as shown in Fig. 5B, the volume of the cavity 320 of the discharging unit D is expanded, compared to the initial state shown in Fig. 5A. In the state shown in Fig. 5B, when the potential shown by the driving signal Vin is changed, the vibration plate 310 is restored by an elastic restoring force and is moved downwards of the drawing by passing the position of the vibration plate 310 in the initial state, and the volume of the cavity 320 is rapidly contracted as shown in Fig. 5C. At that time, some ink filled in the cavity 320 is discharged as ink droplets from the nozzle N which is linked to the cavity 320, due to compression pressure generated in the cavity 320.

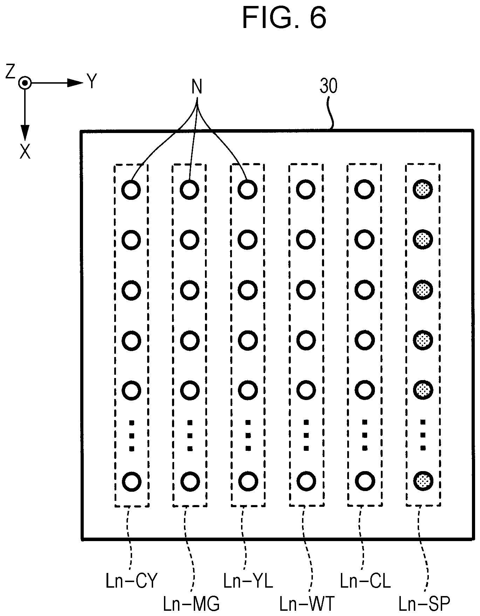

Fig. 6 is an explanatory diagram for illustrating an example of arrangement of M nozzles N provided in the recording head 30 in a plan view of the three-dimensional object formation apparatus 1 in a positive Z direction or a negative Z direction.

As shown in Fig. 6, in the recording head 30, six nozzle arrays Ln formed of a nozzle array Ln-CY formed of a plurality of nozzles N, a nozzle array Ln-MG formed of a plurality of nozzles N, a nozzle array Ln-YL formed of a plurality of nozzles N, a nozzle array Ln-WT formed of a plurality of nozzles N, a nozzle array Ln-CL formed of a plurality of nozzles N, and a nozzle array Ln-SP formed of a plurality of nozzles N, are provided. Herein, the nozzle N belonging to the nozzle array Ln-CY is a nozzle N provided in the discharging unit D for discharging the cyan (CY) ink, the nozzle N belonging to the nozzle array Ln-MG is a nozzle N provided in the discharging unit D for discharging the magenta (MG) ink, the nozzle N belonging to the nozzle array Ln-YL is a nozzle N provided in the discharging unit D for discharging the yellow (YL) ink, the nozzle N belonging to the nozzle array Ln-WT is a nozzle N provided in the discharging unit D for discharging the white (WT) ink, the nozzle N belonging to the nozzle array Ln-CL is a nozzle N provided in the discharging unit D for discharging the clear (CL) ink, and the nozzle N belonging to the nozzle array Ln-SP is a nozzle N provided in the discharging unit D for discharging the supporting ink.

In the embodiment, as shown in Fig. 6, a case where the plurality of nozzles N configuring each nozzle array Ln are arranged to be lined up in a line in the X axis direction has been used, but for example, the nozzles may be arranged in a so-called zigzag manner in which the positions of some nozzles N (for example, the even-numbered nozzles N) of the plurality of nozzles N configuring each nozzle array Ln and the positions of the other nozzles N (for example, odd-numbered nozzles N) are different from each other in the Y axis direction.

In addition, in each nozzle array Ln, a gap (pitch) between the nozzles N can be appropriately set according to the printing resolution (dpi: dot per inch).

1.4. Driving Signal Generation Unit

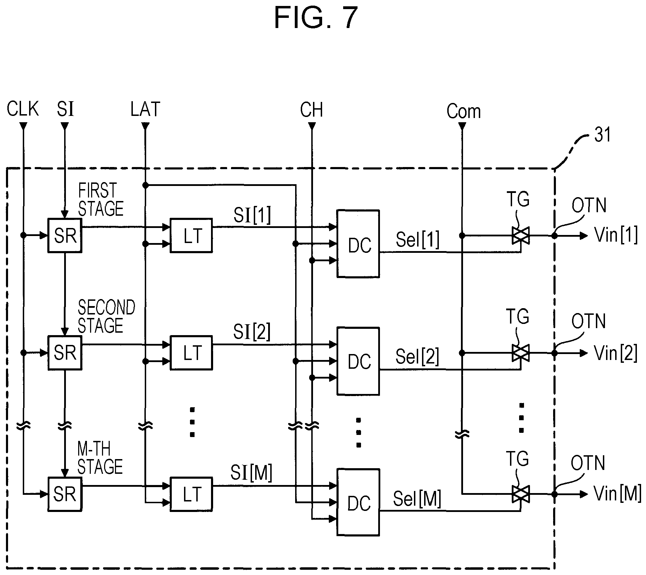

Next, the configuration and the operation of the driving signal generation unit 31 will be described with reference to Fig. 7 to Fig. 9.

Fig. 7 is a block diagram showing the configuration of the driving signal generation unit 31.

As shown in Fig. 7, the driving signal generation unit 31 includes M sets consisting of a shift resistor SR, a latch circuit LT, a decoder DC, and a transmission gate TG so as to respectively correspond to the M discharging units D provided in the recording head 30. Hereinafter, each element configuring the M sets included in the driving signal generation unit 31 and the recording head 30 is referred to as a first, second, ..., and M-th element in the order from the top of the drawing.

A clock signal CLK, the waveform designation signal SI, a latch signal LAT, a change signal CH, and the driving waveform signal Com are supplied to the driving signal generation unit 31 from the control unit 6.

The waveform designation signal SI is a digital signal which designates an ink amount to be discharged by the discharging unit D and includes the waveform designation signals SI[1] to SI[M].

Among these, a waveform designation signal SI[m] regulates discharge or non-discharge of the ink from the discharging unit D[m] and the amount of the ink discharged with two bits consisting of a high-order bit b1 and a low-order bit b2. Specifically, depending on the type of the waveform designation signal SI[m] supplied to the driving signal generation unit 31, the driving signal generation unit 31 instructs the discharging unit D[m] either to discharge ink of an amount corresponding to a large dot, to discharge ink of an amount corresponding to a medium dot, to discharge ink of an amount corresponding to a small dot, or not to discharge ink.

Each shift resistor SR temporarily holds the waveform designation signal SI[m] of two bits corresponding to each stage among the waveform designation signals SI (SI[1] to SI[M]). Specifically, the first, second, ..., and M-th M shift resistors SR respectively corresponding to the M discharging units D[1] to D[M] are cascade-connected to each other, and the waveform designation signals SI supplied in serial order are transmitted in the order according to the clock signal CLK. When the waveform designation signals SI are transmitted to all of the M shift resistors SR, each of the M shift resistors SR holds the corresponding waveform designation signal SI[m] of 2 bits among the waveform designation signals SI.

Each of the M latch circuits LT simultaneously latches the waveform designation SI[m] of 2 bits corresponding to each stage held by each of the M shift resistors SR, at a timing when the latch signal LAT rises.

However, an operation period which is a period for executing the formation process by the three-dimensional object formation apparatus 1 is configured from a plurality of unit periods Tu. In the embodiment, each unit period Tu is formed of three control periods Ts (Ts1 to Ts3). In the embodiment, the three control periods Ts1 to Ts3 have a duration equivalent to each other. Although will be described later in detail, the unit period Tu is regulated by the latch signal LAT, and the control period Ts is regulated by the latch signal LAT and the change signal CH.

The control unit 6 supplies the waveform designation signal SI[m] to the driving signal generation unit 31 at a timing before the unit period Tu is started. The control unit 6 supplies the latch signal LAT to each latch circuit LT of the driving signal generation unit 31 so that the waveform designation signal SI[m] is latched in each unit period Tu.

The m-th decoder DC decodes the waveform designation signal SI[m] of 2 bits which is latched by the m-th latch circuit LT and outputs a selection signal Sel[m] which is set as any level of a high level (H level) and a low level (L level) in each of the control periods Ts1 to Ts3.

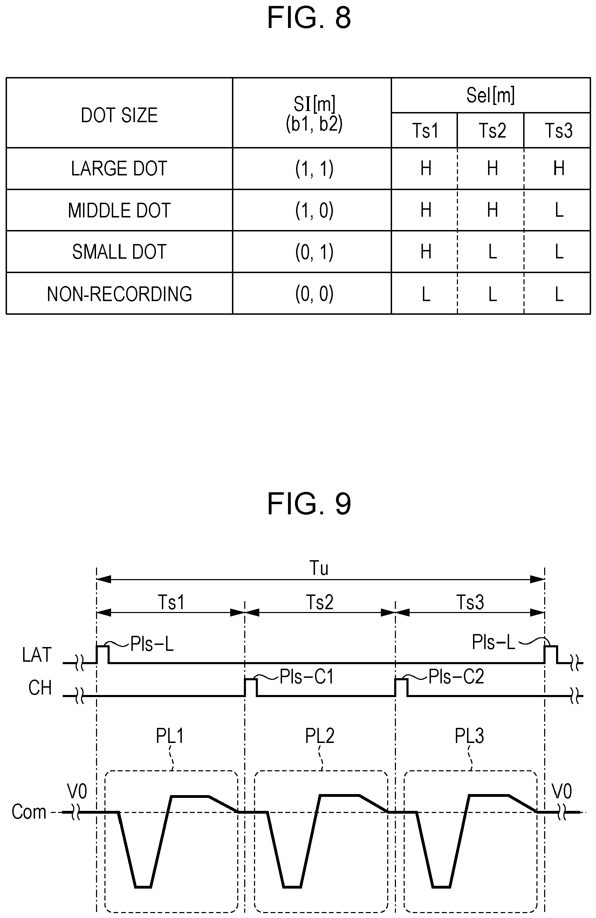

Fig. 8 is an explanatory diagram for illustrating the content of the decoding performed by the decoder DC.

As shown in the drawing, when the content shown by the waveform designation signal SI[m] is (b1,b2) = (1,1), the m-th decoder DC sets the selection signal Sel[m] as the H level in the control periods Ts1 to Ts3, when the content shown by the waveform designation signal SI[m] is (b1,b2) = (1,0), the m-th decoder DC sets the selection signal Sel[m] as the H level in the control periods Ts1 and Ts2 and sets the selection signal Sel[m] as the L level in the control period Ts3, when the content shown by the waveform designation signal SI[m] is (b1,b2) = (0,1), the m-th decoder DC sets the selection signal Sel[m] as the H level in the control period Ts1 and sets the selection signal Sel[m] as the L level in the control periods Ts2 and Ts3, and when the content shown by the waveform designation signal SI[m] is (b1,b2) = (0,0), the m-th decoder DC sets the selection signal Sel[m] as the L level in the control periods Ts1 to Ts3.

As shown in Fig. 7, the M transmission gates TG included in the driving signal generation unit 31 are provided so as to correspond to the M discharging units D included in the recording head 30.

The m-th transmission gate TG is turned on when the selection signal Sel[m] output from the m-th decoder DC is in the H level and is turned off when the selection signal is in the L level. The driving waveform signal Com is supplied to one terminal of each transmission gate TG. The other terminal of the m-th transmission gate TG is electrically connected to an m-th output terminal OTN.

When the selection signal Sel[m] is set as the H level and the m-th transmission gate TG is turned on, the driving waveform signal Com is supplied from the m-th output terminal OTN to the discharging unit D[m] as the driving signal Vin[m].

Although this operation of the embodiment will be described later in detail, in the embodiment, a potential of the driving waveform signal Com at a timing when the state of the transmission gate TG is switched from on to off (that is, timing of the start and the end of the control periods Ts1 to Ts3) is set as a reference potential V0. Accordingly, when the transmission gate TG is turned off, the potential of the output terminal OTN is maintained as the reference potential V0 by the volume or the like of the piezoelectric element 300 of the discharging unit D[m]. Hereinafter, for convenience of description, the description will be made by assuming that, when the transmission gate TG is turned off, the potential of the driving signal Vin[m] is maintained as the reference potential V0.

As described above, the control unit 6 controls the driving signal generation unit 31 so that the driving signal Vin is supplied to each discharging unit D in each unit period Tu. Accordingly, each discharging unit D can discharge the amount of ink corresponding to a value shown by the waveform designation signal SI determined based on the formation layer data FD in each unit period Tu and can form dots corresponding to the formation layer data FD on the formation table 45.

Fig. 9 is a timing chart for illustrating various signals supplied to the driving signal generation unit 31 by the control unit 6 in each unit period Tu.

As shown in Fig. 9, the latch signal LAT includes a pulse waveform Pls-L and the unit period Tu is regulated by the pulse waveform Pls-L. In addition, the change signal CH includes a pulse waveform Pls-C and the unit period Tu is divided into the control periods Ts1 to Ts3 by the pulse waveform Pls-C. Although not shown in the drawing, the control unit 6 synchronizes the waveform designation signal SI with the clock signal CLK in each unit period Tu and supplies the signal to the driving signal generation unit 31 in serial order.

As shown in Fig. 9, driving waveform signal Com includes a waveform PL1 disposed in the control period Ts1, a waveform PL2 disposed in the control period Ts2, and a waveform PL3 disposed in the control period Ts3. Hereinafter, the waveforms PL1 to PL3 may be collectively referred to as the waveform PL.

In the embodiment, the potential of the driving waveform signal Com is set as the reference potential V0 at the timing of the start or the end of each control period Ts.

When the selection signal Sel[m] is in the H level in one control period Ts, the driving signal generation unit 31 supplies the waveform PL disposed in the one control period Ts in the driving waveform signal Com to the discharging unit D[m] as the driving signal Vin[m]. On the other hand, when the selection signal Sel[m] is in the L level in one control period Ts, the driving signal generation unit 31 supplies the driving waveform signal Com which is set as the reference potential V0 to the discharging unit D[m] as the driving signal Vin[m].

Accordingly, regarding the driving signal Vin[m] supplied by the driving signal generation unit 31 to the discharging unit D[m] in the unit period Tu, when the value shown by the waveform designation signal SI[m] is (b1,b2) = (1,1), the driving signal is a signal including the waveforms PL1 to PL3, when the value shown by the waveform designation signal SI[m] is (b1,b2) = (1,0), the driving signal is a signal including the waveforms PL1 and PL2, when the value shown by the waveform designation signal SI[m] is (b1,b2) = (0,1), the driving signal is a signal including the waveform PL1, and when the value shown by the waveform designation signal SI[m] is (b1,b2) = (0,0), the driving signal is a signal which is set as the reference potential V0.

When the driving signal Vin[m] including one waveform PL is supplied, the discharging unit D[m] discharges a small amount of ink and forms a small dot.

Accordingly, when the value shown by the waveform designation signal SI[m] is (b1,b2) = (0,1) and the driving signal Vin[m] supplied to the discharging unit D[m] includes one waveform PL (PL1) in the unit period Tu, a small amount of ink is discharged from the discharging unit D[m] based on the one waveform PL, and a small dot is formed with the discharged ink.

When the value shown by the waveform designation signal SI[m] is (b1,b2) = (1,0) and the driving signal Vin[m] supplied to the discharging unit D[m] includes two waveforms PL (PL1 and PL2) in the unit period Tu, a small amount of ink is discharged from the discharging unit D[m] twice based on the two waveforms PL, the small amounts of ink which are discharged twice are combined with each other, and accordingly a medium dot is formed.

When the value shown by the waveform designation signal SI[m] is (b1,b2) = (1,1) and the driving signal Vin[m] supplied to the discharging unit D[m] includes three waveforms PL (PL1 to PL3) in the unit period Tu, a small amount of ink is discharged from the discharging unit D[m] three times based on the three waveforms PL, the small amounts of ink which are discharged three times are combined with each other, and accordingly a large dot is formed.

Meanwhile, when the value shown by the waveform designation signal SI[m] is (b1,b2) = (0,0) and the driving signal Vin[m] supplied to the discharging unit D[m] does not include the waveform PL and is maintained as the reference potential V0 in the unit period Tu, ink is not discharged from the discharging unit D[m] and a dot is not formed (recording is not performed).

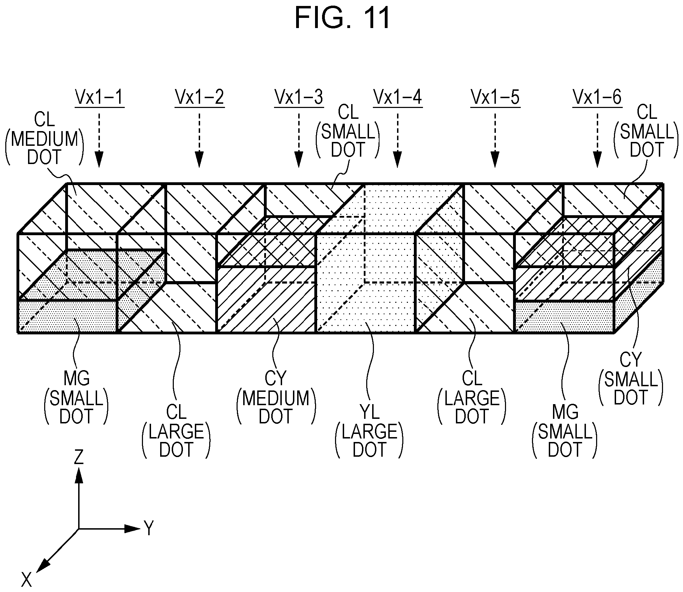

In the embodiment, the waveform PL of the driving waveform signal Com is determined so that the small amount of ink discharged for forming a small dot is an amount which is approximately 1/3 of the ink necessary for forming a unit structure. Accordingly, in the embodiment, the unit structure corresponding to one voxel Vx is configured with any one of three patterns of one large dot, a combination of one medium dot and one small dot, and a combination of three small dots (see Fig. 11).

In the embodiment, as clearly described above, the medium dot has a size which is double the size of the small dot and the large dot has a size which is three times of that of the small dot.

2. Formation Process

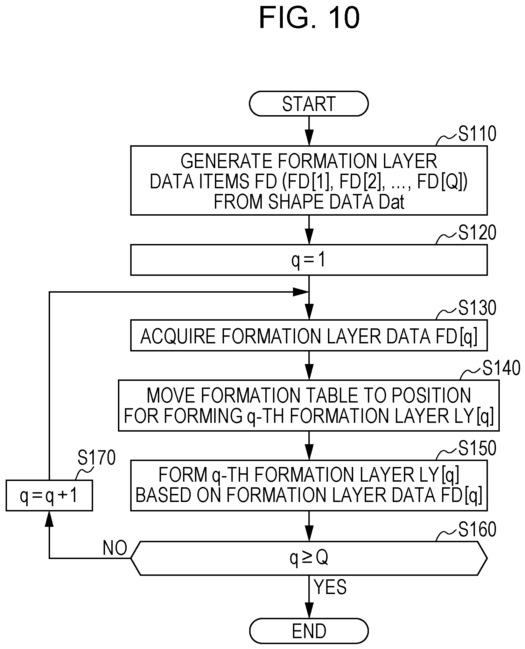

Next, the formation process executed by the three-dimensional object formation system 100 will be described with reference to Fig. 10 to Fig. 14B.

2.1. Outline of Formation Process

Fig. 10 is a flowchart showing an example of the operation of the three-dimensional object formation system 100 when executing the formation process.

The formation process is started when the formation data generation unit 93 acquires the shape data Dat output by the shape data generation unit 92.

As shown in Fig. 10, when the formation process is started, the formation data generation unit 93 generates formation layer data items FD[1] to FD[Q] based on the shape data Dat output by the shape data generation unit 92 (S110).

Then, the control unit 6 sets "1" for a variable q which shows the number of the layer (S120). Next, the control unit 6 acquires a formation layer data FD[q] generated by the formation data generation unit 93 (S130). The control unit 6 controls the lift mechanism driving motor 71 so that the formation table 45 moves to a position for forming a q-th formation layer LY[q] (S140).

As the position for forming a formation layer LY[q], any position may be used as long as it is a position where the ink discharged from the head unit 3 can be properly landed on a dot formation position (voxel Vxq) designated by the formation layer data FD[q]. In Step S140, the position of the formation table 45 may be controlled so that a space between the formation layer LY[q] and the head unit 3 in the Z axis direction is constant. In this case, the control unit 6, for example, may move the formation table 45 in the negative Z direction by an amount of the predetermined thickness $\Delta Z$ during the time after the formation layer LY[q] is formed and before the formation layer LY[q+1] is formed.

After moving the formation table 45 to a position for forming the formation layer LY[q], the control unit 6 controls the operations of the head unit 3, the position change mechanism 7, and the curing unit 61 so that the formation layer LY[q] is formed based on the formation layer data FD[q] (S150). As clearly described in Figs. 2A to 2E, the formation layer LY[1] is formed on the formation table 45 and the formation layer LY[q+1] is formed on the formation layer LY[q].

After that, the control unit 6 determines whether or not the variable q satisfies an expression of "q $\geq$ Q" (S160). When the determined result is positive, it is determined that the formation of the three-dimensional object Obj is completed and the formation process is finished, and meanwhile, when the determined result is negative, 1 is added to the variable q and the process proceeds to Step S130 (s170).

As described above, by executing the formation process shown in Fig. 10, the three-dimensional object formation system 100 generates the formation layer data items FD[1] to FD[Q] based on the shape data Dat and laminates the formation layers LY[1] to LY[Q] which are formed based on the formation layer data items FD[1] to FD[Q], and accordingly, the three-dimensional object Obj can be formed.

Fig. 10 is merely an example of the flow of the formation process. For example, in Fig. 10, the formation of the formation layer LY[1] to be initially formed is started after completing the generation of all formation layer data items FD[1] to FD[Q], but the invention is not limited to this embodiment. When the generation of the formation layer data FD[q] is completed, the formation layer LY[q] corresponding to the formation layer data FD[q] may be formed without waiting for the generation of the next formation layer data FD[q+1].

2.2. Dots Formed in Each Voxel

Fig. 11 is an explanatory diagram for illustrating dots configuring a unit structure which is provided to correspond to each voxel Vx.

In Step S150, the control unit 6 controls a process of forming the dots so that the colored formation layer LY[q] designated by the shape data Dat is formed based on the formation layer data FD[q]. That is, the formation layer data FD[q] designates the arrangement and the size of the dots for forming the formation layer LY[q] so that the color designated by the shape data Dat is reproduced in the formation layer LY[q]. Specifically, the formation layer data FD[q] designates at least the arrangement and the size of the dot contributing to the color of the three-dimensional object Obj, that is, the dot formed using the chromatic ink, as the dot for forming the formation layer LY[q].

For example, in the example shown in Fig. 11, a case where the formation layer data FD[1] designates the arrangement and the size of the dots to be formed with respect to six voxels Vx1 (Vx1-1 to Vx1-6) belonging to the formation layer LY[1] so that the color shown by the shape data Dat is reproduced in the formation layer LY[1], is used. More specifically, a case where the formation layer data FD[1] designates the arrangement and the size of the dots so as to form a small magenta (MG) dot in the voxel Vx1-1, to form a medium cyan (CY) dot in the voxel Vx1-3, to form a large yellow (YL) dot in the voxel Vx1-4, to form a small magenta (MG) dot and a small cyan (CY) dot in the voxel Vx1-6, and not to form a dot formed of the chromatic ink in the voxels Vx1-2 and Vx1-5, among the six voxels Vx1 (Vx1-1 to Vx1-6) belonging to the formation layer LY[1], is used.

Meanwhile, in Step S150, the control unit 6 controls a process of forming a dot, so that the formation layer LY[q] has the predetermined thickness $\Delta Z$ based on the formation layer data FD[q]. That is, the formation layer data FD[q] designates the arrangement and the size of the dots for forming the formation layer LY[q] so that the formation layer LY[q] is formed as an assembly of the unit structure having the predetermined thickness $\Delta Z$.

Specifically, the control unit 6 controls the operation of each unit of the three-dimensional object formation apparatus 1 so that each unit structure is formed with any one pattern of one large dot, a combination of one medium dot and one small dot, and a combination of three small dots. That is, the formation layer data FD[q] designates any one pattern of one large dot, a combination of one medium dot and one small dot, and a combination of three small dots, as the dots to be formed in each voxel Vx.

With only the dots formed of the chromatic ink which is necessary for reproducing the color designated by the shape data Dat, it is difficult to form the unit structure in each voxel Vx and the formation layer LY[q] may not have the predetermined thickness $\Delta Z$. Accordingly, formation layer data FD[q] designates the arrangement and the size of the dots so that the dots formed of achromatic ink are formed in the voxel Vx where it is difficult to form the unit structure only with the dots formed of chromatic ink, in addition to the dots formed of chromatic ink. Accordingly, the same total volume of ink (dots) is discharged in each voxel Vx so as to form a complete unit structure in each voxel Vx. Each unit structure corresponds to and contains the same predetermined total volume of ink.

For example, in the example shown in Fig. 11, dots formed of achromatic ink such as clear (CL) ink are formed in a portion where the voxel Vx is not fully filled only with the dots formed of chromatic ink. More specifically, the dots formed of clear ink are formed so as to fill each voxel Vx in the voxels Vx1-1, Vx1-2, Vx1-3, Vx1-5, and Vx1-6 which are voxels Vx where it is difficult to form the unit structure only with the dots formed of chromatic ink, among the voxels Vx1-1 to Vx1-6. Accordingly, the unit structure is also formed in the voxels Vx1-1, Vx1-2, Vx1-3, Vx1-5, and Vx1-6.

As described above, in the embodiment, by using the dots having a plurality of sizes including the dots formed of achromatic ink, the formation layer LY[q] is formed as an assembly of the unit structures having the predetermined thickness $\Delta Z$.

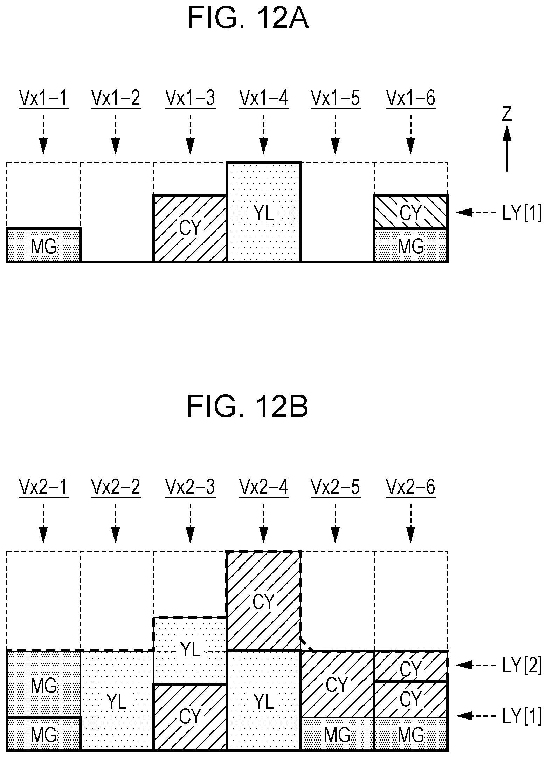

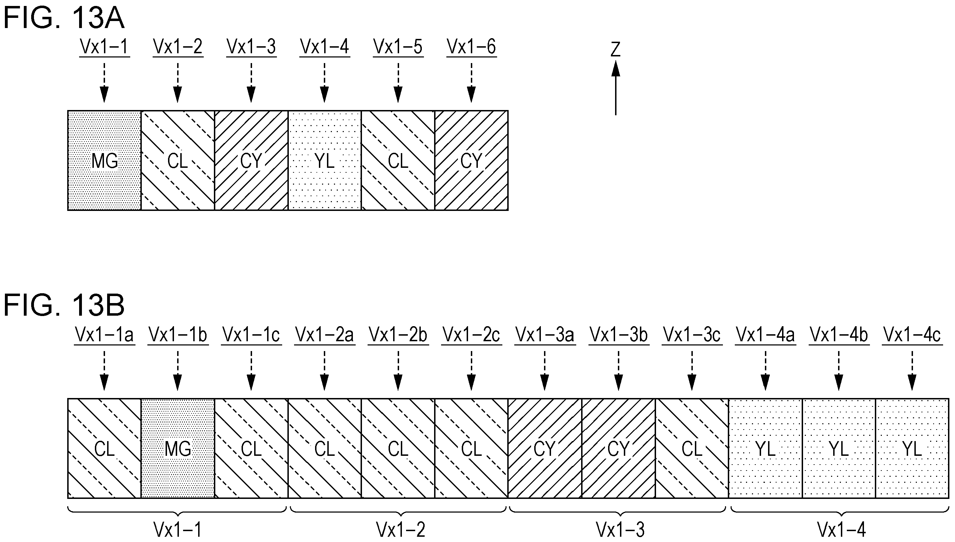

Hereinafter, in order to make the advantages of the formation method of the formation layer LY[q] according to the embodiment clear, Comparative Example 1 shown in Figs. 12A and 12B and Comparative Example 2 shown in Figs. 13A and 13B will be described.

Fig. 12 is a diagram for illustrating the formation layers LY[1] and LY[2] which are formed by a three-dimensional object formation system according to Comparative Example 1. As shown in the drawing, Comparative Example 1 is different from the embodiment in that only the dots formed of chromatic ink are formed and the dots formed of achromatic ink are not formed in each voxel Vx.

In Comparative Example 1, the dots are not formed so as to fill the voxel Vx and there are the voxels Vx in which the unit structure is not formed. Accordingly, in Comparative Example 1, as shown in Fig. 12A, concavities and convexities are formed on the upper surface of the formation layer LY[1]. As a result, in Comparative Example 1, as shown in Fig. 12B, it is difficult to form the formation layer LY[2] in a position as originally intended. That is, in Comparative Example 1, it is difficult to properly form the shape of the three-dimensional object Obj.

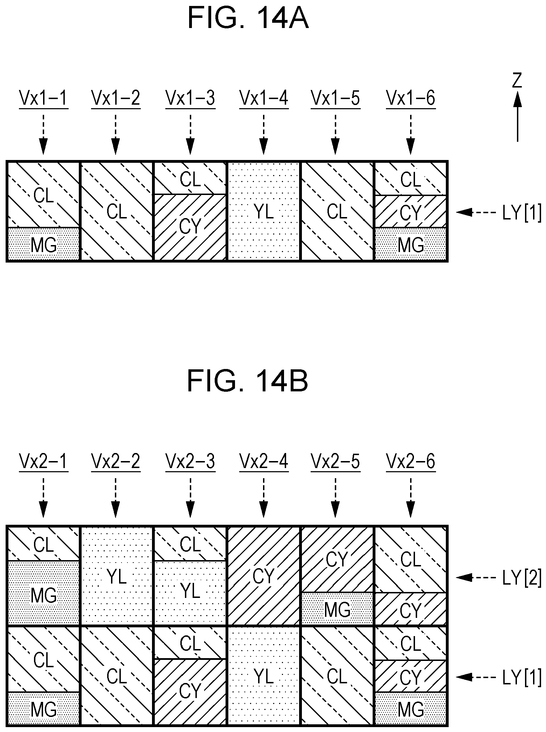

Meanwhile, in the embodiment, as shown in Fig. 11 and Fig. 14A, by forming the unit structure in all voxels Vx1 corresponding to the formation layer LY[1], the formation layer LY[1] is set to have the predetermined thickness $\Delta Z$. Accordingly, in the embodiment, as shown in Fig. 14A, the upper surface of the formation layer LY[1] can be flattened and, as shown in Fig. 14B, the formation layer LY[2] can be formed in a position as originally intended. Therefore, in the embodiment, it is possible to properly form the shape of the three-dimensional object Obj.

Figs. 13A and 13B are explanatory diagram for illustrating the formation layer LY[q] which is formed by a three-dimensional object formation system according to Comparative Example 2. As shown in the drawing, Comparative Example 2 is different from the embodiment in that the formation layer LY[q] is formed with dots having one size.

In Comparative Example 2, Fig. 13A shows a case where the dots formed of chromatic ink formed in the voxels Vx1-1 to Vx1-6 shown in Fig. 11 are replaced with large dots. In Fig. 13A, since the ratio of the amount of the inks between the plurality of chromatic inks is different from the case shown in Fig. 11, it is difficult to properly reproduce the color shown by the shape data Dat.

In Comparative Example 2, Fig. 13B shows a case where the dots formed in one voxel Vx in Fig. 11 are formed in three voxels Vx, by making a dot size to be three times the size of the dot size in Fig. 11. In Fig. 13B, the color shown by the shape data Dat can be properly reproduced, but the resolution is decreased, compared to the case shown in Fig. 11.

With respect to this, in the embodiment, as shown in Fig. 11 and Fig. 14A, the formation layer LY[1] is formed using the dots having three sizes such as a small dot, a medium dot, and a large dot. Accordingly, it is possible to properly express the color shown by the shape data Dat with high gradation and to express color tones (patterns) with high resolution.

3. Conclusion of Embodiment

As described above, the three-dimensional object formation system 100 of the embodiment forms the formation layer LY[q] as an assembly of the unit structures having the predetermined thickness $\Delta Z$ by using the dots having a plurality of sizes including the dots formed of chromatic ink and the dots formed of achromatic ink.

Accordingly, the three-dimensional object formation system 100 of the embodiment can form the three-dimensional object Obj of which the color shown by the shape data Dat is properly reproduced with high gradation and the shape shown by the shape data Dat is properly reproduced.

In the embodiment, the large dot is an example of a "first dot", the small dot is an example of a "second dot", and the medium dot is an example of a "third dot". In the embodiment, the size (volume) of the large dot is an example of a "first size", the size of the small dot is an example of a "second size", and the size of the medium dot is an example of a "third size". In addition, in the embodiment, the chromatic color such as cyan (CY) or magenta (MG) is an example of a "first color" and the achromatic color such as clear (CL) is an example of a "second color".

B. Modification Examples

The above embodiment can be modified in various manners. Specific modified embodiments will be described hereinafter. Two or more embodiments arbitrarily selected from the below examples can be suitably combined with each other in a range not contradicting each other.

In the modification examples below, the same reference numerals used in the above description will be used for the elements exhibiting the same operations or functions as those in the above embodiment and the specific description thereof will be suitably omitted. Modification Example 1

In the embodiment described above, the three-dimensional object formation apparatus 1 forms the three-dimensional object Obj by laminating the formation layers LY which are formed by curing the formation ink, but the invention is not limited to the embodiment, and the formation layers LY may be formed by solidifying powder spread in a layered shape by curable formation ink and the three-dimensional object Obj may be formed by laminating the formed formation layers LY.

In this case, the three-dimensional object formation apparatus 1 may include a powder layer formation unit (not shown) which spreads the powder on the formation table 45 to have the predetermined thickness $\Delta Z$ and a powder discarding unit (not shown) which discards the liquid (liquid other than liquid solidified by the formation ink) not configuring the three-dimensional object Obj after forming the three-dimensional object Obj. Hereinafter, a layer of the powder provided in a q-th layer is referred to as a powder layer PW[q].

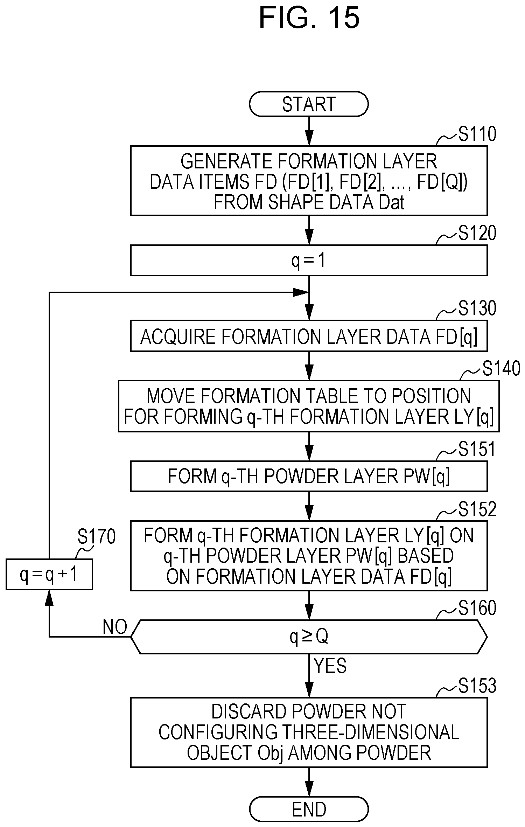

Fig. 15 is a flowchart showing an example of the operation of the three-dimensional object formation system 100 when executing the formation process according to the modification example. The flowchart according to the modification example shown in Fig. 15 is the same as the flowchart according to the embodiment shown in Fig. 10, except for that Step S150 is not executed and Steps S151, S152 and S153 are executed.

As shown in Fig. 15, the control unit 6 according to the modification example controls the operation of each unit of the three-dimensional object formation apparatus 1 so that the powder layer formation unit forms the powder layer PW[q] (S151).

The control unit 6 according to the modification example controls the operation of each unit of the three-dimensional object formation apparatus 1 so as to form dots on the powder layer PW[q] to form the formation layer LY[q] based on the formation layer data FD[q] (S152). Specifically, first, the control unit 6 controls the operation of the head unit 3 so that the formation ink or the supporting ink are discharged to the powder layer PW[q] based on the formation layer data FD[q]. Next, the control unit 6 controls the operation of the curing unit 61 so as to solidify the powder of a portion where the dots are formed on the powder layer PW[q], by curing the dots formed with the ink discharged to the powder layer PW[q]. Accordingly, the powder of the powder layer PW[q] is solidified with the ink and the formation layer LY[q] can be formed.

The control unit 6 according to the modification example controls the operation of the powder discarding unit so as to discard the powder not configuring the three-dimensional object Obj after the three-dimensional object Obj is formed (S153).

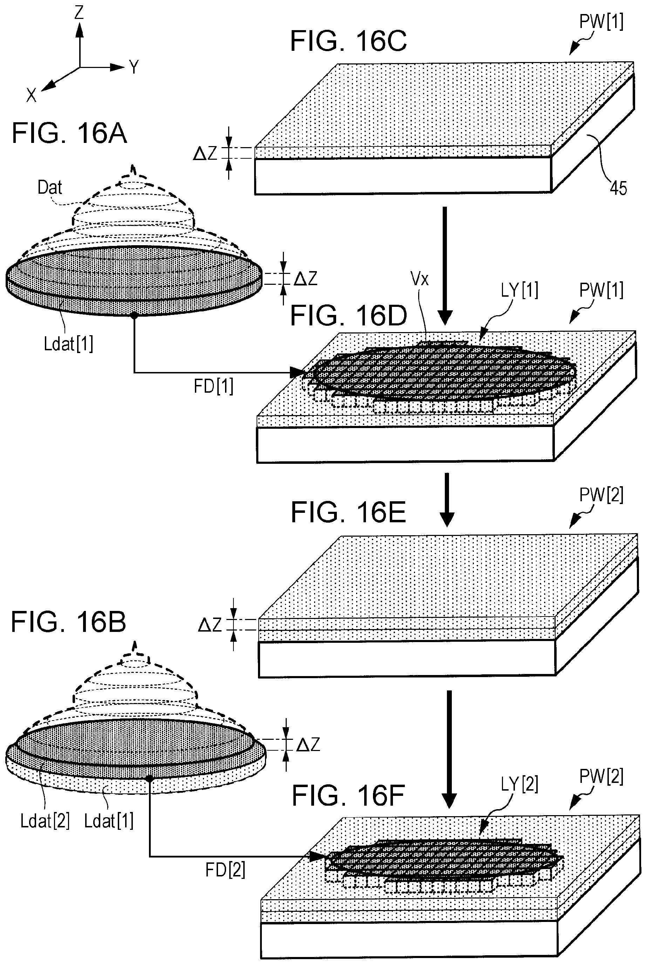

Figs. 16A to 16F are explanatory diagrams for illustrating a relationship between the shape data Dat and the section body data Ldat[q], the formation layer data FD[q], the powder layer PW[q], and the formation layer LY[q] according to the modification example.

Among these, Figs. 16A and 16B show the section body data items Ldat[1] and Ldat[2] in the same manner as in Figs. 2A and 2B. Even in the modification example, the section body data Ldat[q] is generated by slicing the shape data Dat, the formation layer data FD[q] is generated from the section body data Ldat[q], and the formation layer LY[q] is formed with the dots formed based on the formation layer data FD[q].

Hereinafter, the formation of the formation layer LY[q] according to the modification example will be described with reference to Figs. 16C to 16F using the formation layers LY[1] and LY[2] as examples.

As shown in Fig. 16C, the control unit 6 controls the operation of the powder layer formation unit so as to form the powder layer PW[1] having the predetermined thickness $\Delta Z$ before forming the formation layer LY[1] (see Step S151 described above).

Next, as shown in Fig. 16D, the control unit 6 controls the operation of each unit of the three-dimensional object formation apparatus 1 so that the formation layer LY[1] is formed in the powder layer PW[1] (see Step S152 described above). Specifically, first, the control unit 6 controls the operation of the head unit 3 based on the formation layer data FD[1] to discharge the ink to the powder layer PW[1] to form the dots. Then, the control unit 6 controls the curing unit 61 so as to cure the dots formed on the powder layer PW[1] to solidify the powder in a portion where the dot is formed and form the formation layer LY[1].

After that, as shown in Fig. 16E, the control unit 6 controls the powder layer formation unit so as to form the powder layer PW[2] having the predetermined thickness $\Delta Z$ on the powder layer PW[1] and the formation layer LY[1]. As shown in Fig. 16F, the control unit 6 controls the operation of each unit of the three-dimensional object formation apparatus 1 so that the formation layer LY[2] is formed.

As described above, the control unit 6 forms the formation layer LY[q] in the powder layer PW[q] based on the formation layer data FD[q] and laminates the formation layers LY[q] to form the three-dimensional object Obj.

Modification Example 2

In the embodiment described above, the ink discharged from the discharging unit D is a curable ink such as an ultraviolet curable ink, but the invention is not limited to the embodiment, and ink formed of a thermoplastic resin may be used.

In this case, it is preferable that the ink is discharged in a state of being heated in the discharging unit D. That is, the discharging unit D according to the modification example preferably performs a so-called thermal type discharging process of generating air bubbles in the cavity 320 to increase pressure in the cavity 320 by heating a heating element (not shown) provided in the cavity 320, to discharge the ink.

In this case, since the ink discharged from the discharging unit D is cooled and cured by the outside air, the three-dimensional object formation apparatus 1 may not include the curing unit 61.

Modification Example 3

In the embodiment and the modification examples described above, the sizes of the dots which can be discharged by the three-dimensional object formation apparatus 1 are three of a small dot, a medium dot, and a large dot, but the invention is not limited to this embodiment, and the sizes of the dots which can be discharged by the three-dimensional object formation apparatus 1 may be two or more.

Herein, the size of the voxel Vx is represented as $SV_x$, the number of types of the size of the dots which can be discharged by the three-dimensional object formation apparatus 1 is set as K, and the sizes of each dot are represented as $SD_1$, $SD_2$, ..., $SD_K$ (K is a natural number satisfying an expression of $K \geq 2$). Herein, an expression of $SD_1 > SD_2 > ... > SD_K$ is satisfied.

In this case, at least two patterns of combinations of non-negative integers $\alpha_1$, $\alpha_2$, ..., $\alpha_k$ satisfying the following equation (1) may exist.

$$SV_X = \sum_{j=1}^{K} \left( \alpha_j SD_j \right) \quad \cdots\cdots (1)$$

For example, as the combinations of the non-negative integers $\alpha_1$, $\alpha_2$, ..., $\alpha_k$ satisfying the equation (1), at least two combinations may exist among the three types of first to third combinations below.

(A) First Combination: the integer $\alpha_1$ is "1" and all integers $\alpha_2$, ..., $\alpha_k$ are "0".
(B) Second Combination: by assuming that K satisfies an expression of $K \geq 3$, regarding natural numbers j1 and j2 satisfying an expression of $2 \leq j1 < j2 \leq K$, integers $\alpha_{j1}$ and $\alpha_{j2}$ are equal to or greater than "1".
(C) Third Combination: an integer $\alpha_{j3}$ corresponding to a natural number j3 satisfying an expression of $2 \leq j3 \leq K$ is equal to or greater than "2" and all other integers $\alpha_j$ satisfying $j \neq j3$ are "0".

The first combination shows that the maximum size $SD_1$ among the K type dots is approximately the same as the size $SV_x$ of the voxel Vx.

The second combination shows that the voxel Vx can be formed with a plurality of dots including dots having one or two or more sizes $SD_{j1}$ and dots having one or two or more sizes $SD_{j2}$.

The third combination shows that the voxel Vx can be formed with the plurality of dots of the size $SD_{j3}$.

In the modification example, each of the sizes $SD_1$, $SD_2$, ..., $SD_K$ of the dots and the size $SV_x$ of the voxel Vx are preferably a size which is integer times of the minimum size $SD_K$. Modification Example 4

In the embodiment and the modification examples described above, the formation data generation unit 93 is provided in the host computer 9, but the invention is not limited to this embodiment, and the formation data generation unit 93 may be provided in the three-dimensional object formation apparatus 1. For example, the formation data generation unit 93 may be mounted as a functional block which is realized by operation of the control unit 6 according to the control program.

When the three-dimensional object formation apparatus 1 includes the formation data generation unit 93, the three-dimensional object formation apparatus 1 can generate the formation layer data FD based on the shape data Dat supplied from the external host computer 9 and form the three-dimensional object Obj based on the generated formation layer data FD. Modification Example 5

In the embodiment and the modification examples described above, the three-dimensional object formation system 100 includes the shape data generation unit 92, but the invention is not limited to this embodiment, and the three-dimensional object formation system 100 may be configured without including the shape data generation unit 92.

That is, the three-dimensional object formation system 100 may form the three-dimensional object Obj based on the shape data Dat supplied from the outside of the three-dimensional object formation system 100.

Modification Example 6

In the embodiment and the modification examples described above, the driving waveform signal Com is a signal including the waveforms PL1 to PL3, but the invention is not limited to this embodiment, and the driving waveform signal Com may be any signal, as long as it is a signal including a waveform at which the amounts of ink corresponding to the plurality of sizes of the dots can be discharged from the discharging unit D. For example, the driving waveform signal Com may include two waveforms having shapes different from each other. In addition, the driving waveform signal Com may be set as a different waveform depending on the type of the ink.

In addition, in the embodiment and the modification examples described above, the bit number of the waveform designation signal SI[m] is two bits, but the invention is not limited to this embodiment, and the bit number of the waveform designation signal SI[m] may be suitably determined depending on the number of types of the sizes of the dots formed with the ink discharged from the discharging unit D.

**Claims**

1. A three-dimensional object formation apparatus (1) comprising:

   a head unit (3) adapted to discharge liquid of a plurality of colors including a first color and a second color and to form dots having a plurality of sizes including a first dot having a first size and a second dot having a second size with the discharged liquid; and
   a curing unit (61) adapted to cure the dots, wherein the three-dimensional object formation apparatus (1) is adapted to form a three-dimensional object (Obj) by laminating formation layers (LY) having a predetermined uniform thickness (ΔZ) which are formed using the cured dots, and
   the three-dimensional object formation apparatus (1) is adapted to form each of the formation layers (LY) by discharging the liquid to form dots including the first dot and the second dot,
   the three-dimensional object formation apparatus (1) further comprising a control unit (6) adapted to control discharge of the liquid from the head unit (3),
   **characterized in that** the head unit (3) is adapted to form a third dot having a third size with the discharged liquid,
   the second size is smaller than the third size,
   the third size is smaller than the first size, and
   the control unit (6) is adapted to control the discharge of the liquid from the head unit (3) so as to form each formation layer (LY) as an assembly of unit structures each having the same predetermined volume, and to form each of the unit structures with one or a plurality of the second dots and one or a plurality of the third dots.

2. The three-dimensional object formation apparatus (1) according to claim 1, wherein the control unit (6) is adapted to control the discharge of the liquid from the head unit (3) so as to form a unit structure with one first dot.

3. The three-dimensional object formation apparatus (1) according to claim 1 or claim 2, wherein the first color is a chromatic color, and the second color is an achromatic color.

**Patentansprüche**

1. Vorrichtung (1) zur Formung eines dreidimensionalen Objekts, umfassend:

   eine Kopfeinheit (3), die angepasst ist, eine Flüssigkeit in einer Vielzahl von Farben, die eine erste Farbe und eine zweite Farbe enthält, abzugeben und Punkte mit einer Vielzahl von Größen, einen ersten Punkt mit einer ersten Größe und einen zweiten Punkt mit einer zweiten Größe enthaltend, mit der abgegebenen Flüssigkeit zu formen; und
   eine Härtungseinheit (61), die angepasst ist, die Punkte zu härten,
   wobei die Vorrichtung (1) zur Formung eines dreidimensionalen Objekts angepasst ist, ein dreidimensionales Objekt (Obj) durch Laminieren von Formungsschichten (LY) mit einer vorbestimmten Einheitsdicke (ΔZ) zu formen, die unter Verwendung der gehärteten Punkte geformt sind, und
   die Vorrichtung (1) zur Formung eines dreidimensionalen Objekts angepasst ist, jede der Bildungsschichten (LY) durch Abgabe der Flüssigkeit zu formen, um Punkte zu formen, die den ersten Punkt und den zweiten Punkt enthalten,
   die Vorrichtung (1) zur Formung eines dreidimensionalen Objekts des Weiteren umfassend eine Steuerungseinheit (6), die angepasst ist, eine Abgabe der Flüssigkeit aus der Kopfeinheit (3) zu steuern,
   **dadurch gekennzeichnet, dass** die Kopfeinheit (3) angepasst ist, einen dritten Punkt mit einer dritten Größe mit der abgegebenen Flüssigkeit zu formen,
   die zweite Größe kleiner ist als die dritte Größe,
   die dritte Größe kleiner ist als die erste Größe, und
   die Steuerungseinheit (6) angepasst ist, die Abgabe der Flüssigkeit aus der Kopfeinheit (3) zu steuern, um jede Formungsschicht (LY) als ein Gefüge von Einheitsstrukturen zu formen, von denen jede dasselbe vorbestimmte Volumen hat, und um jede der Einheitsstrukturen mit einem oder mehreren der zweiten Punkte und einem oder mehreren der dritten Punkte zu formen.

**2.** Vorrichtung (1) zur Formung eines dreidimensionalen Objekts nach Anspruch 1,
wobei die Steuerungseinheit (6) angepasst ist, die Abgabe der Flüssigkeit aus der Kopfeinheit (3) zu steuern, um eine Einheitsstruktur mit einem ersten Punkt zu formen.

**3.** Vorrichtung (1) zur Formung eines dreidimensionalen Objekts nach Anspruch 1 oder 2,
wobei die erste Farbe eine chromatische Farbe ist, und die zweite Farbe eine achromatische Farbe ist.

## Revendications

**1.** Appareil de formation d'un objet tridimensionnel (1) comprenant :

une unité de tête (3) adaptée pour déverser un liquide d'une

pluralité de couleurs incluant une première couleur et une deuxième couleur et pour former des points ayant une pluralité de tailles incluant un premier point ayant une première taille et un deuxième point ayant une deuxième taille avec le liquide déversé ; et

une unité de durcissement (61) adaptée pour faire durcir les points,

dans lequel l'appareil de formation d'un objet tridimensionnel (1) est adapté pour former un objet tridimensionnel (Obj) en laminant des couches de formation (LY) ayant une épaisseur ($\Delta Z$) régulière prédéterminée, lesquelles sont formées en utilisant les points durcis, et

l'appareil de formation d'un objet tridimensionnel (1) étant adapté pour former chacune des couches de formation (LY) en déversant le liquide pour former des points incluant le premier point et le deuxième point,

l'appareil de formation d'un objet tridimensionnel (1) comprenant en outre une unité de commande (6) adaptée pour commander le déversement du liquide par l'unité de tête (3),

**caractérisé en ce que** l'unité de tête (3) est adaptée pour former un troisième point ayant une troisième taille avec le liquide déversé,

la deuxième taille étant plus petite que la troisième taille,

la troisième taille étant plus petite que la première taille, et

l'unité de commande (6) étant adaptée pour commander le déversement du liquide par l'unité de tête (3) de manière à former chaque couche de formation (LY) en tant qu'assemblage de structures unitaires ayant chacune le même volume prédéterminé, et pour former chacune des structures unitaires avec un ou une pluralité des deuxièmes points et un ou une pluralité des troisièmes points.

**2.** Appareil de formation d'un objet tridimensionnel (1) selon la revendication 1,
dans lequel l'unité de commande (6) est adaptée pour commander le déversement du liquide par l'unité de tête (3) de manière à former une structure unitaire avec un premier point.

**3.** Appareil de formation d'un objet tridimensionnel (1) selon la revendication 1 ou la revendication 2,
dans lequel la première couleur est une couleur chromatique, et
la deuxième couleur étant une couleur achromatique.

# FIG. 1

100

# FIG. 2A

# FIG. 2B

# FIG. 2C

# FIG. 2D

# FIG. 2E

# FIG. 3

# FIG. 4

# FIG. 5A

# FIG. 5B

# FIG. 5C

# FIG. 6

# FIG. 7

# FIG. 8

| DOT SIZE | SI[m] (b1, b2) | Sel[m] | | |
|---|---|---|---|---|
| | | Ts1 | Ts2 | Ts3 |
| LARGE DOT | (1, 1) | H | H | H |
| MIDDLE DOT | (1, 0) | H | H | L |
| SMALL DOT | (0, 1) | H | L | L |
| NON-RECORDING | (0, 0) | L | L | L |

# FIG. 9

# FIG. 10

```
                    START

                                            ~S110
        GENERATE FORMATION LAYER
      DATA ITEMS FD (FD[1], FD[2], ..., FD[Q])
            FROM SHAPE DATA Dat

                                            ~S120
                    q = 1

                                            ~S130
        ACQUIRE FORMATION LAYER DATA FD[q]

                                            ~S140
        MOVE FORMATION TABLE TO POSITION
      FOR FORMING q-TH FORMATION LAYER LY[q]

                                            ~S150
        FORM q-TH FORMATION LAYER LY[q]
      BASED ON FORMATION LAYER DATA FD[q]

   S170
                                            ~S160
   q = q + 1         NO        q ≥ Q

                              YES

                    END
```

# FIG. 11

# FIG. 12A

Vx1-1  Vx1-2  Vx1-3  Vx1-4  Vx1-5  Vx1-6

Z

CY    YL    CY

MG    MG

←--- LY[1]

# FIG. 12B

Vx2-1  Vx2-2  Vx2-3  Vx2-4  Vx2-5  Vx2-6

CY

YL

MG    YL    CY    YL    CY    CY

MG    MG    CY

MG    MG

←--- LY[2]

←--- LY[1]

EP 3 020 538 B1

## FIG. 13A

Vx1-1  Vx1-2  Vx1-3  Vx1-4  Vx1-5  Vx1-6

Z

| MG | CL | CY | YL | CL | CY |

## FIG. 13B

Vx1-1a  Vx1-1b  Vx1-1c  Vx1-2a  Vx1-2b  Vx1-2c  Vx1-3a  Vx1-3b  Vx1-3c  Vx1-4a  Vx1-4b  Vx1-4c

| CL | MG | CL | CL | CL | CL | CY | CY | CL | YL | YL | YL |

Vx1-1            Vx1-2            Vx1-3            Vx1-4

## FIG. 14A

## FIG. 14B

# FIG. 15

```
                    START

  ~S110
  GENERATE FORMATION LAYER
  DATA ITEMS FD (FD[1], FD[2], ..., FD[Q])
  FROM SHAPE DATA Dat

  ~S120
  q = 1

  ~S130
  ACQUIRE FORMATION LAYER DATA FD[q]

  ~S140
  MOVE FORMATION TABLE TO POSITION
  FOR FORMING q-TH FORMATION LAYER LY[q]

  ~S151
  FORM q-TH POWDER LAYER PW[q]

  ~S152
  FORM q-TH FORMATION LAYER LY[q] ON
  q-TH POWDER LAYER PW[q] BASED
  ON FORMATION LAYER DATA FD[q]

  S170
  q = q + 1

  ~S160
  NO          q ≥ Q
              YES

  ~S153
  DISCARD POWDER NOT
  CONFIGURING THREE-DIMENSIONAL
  OBJECT Obj AMONG POWDER

                    END
```

FIG. 16A

FIG. 16B

FIG. 16C

FIG. 16D

FIG. 16E

FIG. 16F

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000280354 A
- JP 2013075390 A

- EP 2189272 A